# EUROPÄISCHE PATENTSCHRIFT

(11) **EP 1 247 841 B1**
(45) Veröffentlichungstag und Bekanntmachung des Hinweises auf die Patenterteilung: **26.09.2012**
(21) Anmeldenummer: 02405236.7
(22) Anmeldetag: 26.03.2002
(51) Int. Cl.: C09B 62/085, C09B 62/44

(54) **Reaktivfarbstoffe, Verfahren zu deren Herstellung und deren Verwendung**
Reactive dyes, process for their preparation and the use thereof
Colorants réactifs, procédé pour leur préparation et leur utilisation

(30) Priorität: 03.04.2001 CH 6262001
(43) Veröffentlichungstag der Anmeldung: 09.10.2002
(73) Patentinhaber: Huntsman Advanced Materials (Switzerland) GmbH, 4057 Basel (CH)
(72) Erfinder: Schmiedl, Jürgen, 79585 Steinen (DE); Moyano, Carlos, 4203 Grellingen (CH)

(56) Entgegenhaltungen:
- EP-A- 0 064 721
- EP-A- 0 065 211
- EP-A- 0 094 055
- EP-A- 0 115 705
- EP-A- 0 131 545
- EP-A- 0 545 219
- EP-A- 0 675 171
- EP-A- 0 709 436
- EP-A- 0 979 849
- DE-A- 2 731 617
- BREDERECK K ET AL: "STRUCTURE REACTIVITY CORRELATIONS OF AZO REACTIVE DYES BASED ON H-ACID. I. NMR CHEMICAL SHIFT VALUES, PKA VALUES, DYESTUFF AGGREGATION AND DYEING BEHAVIOUR" DYES AND PIGMENTS, ELSEVIER APPLIED SCIENCE PUBLISHERS. BARKING, GB, Bd. 21, Nr. 1, 1993, Seiten 23-43, XP000355827 ISSN: 0143-7208
- DATABASE WPI Section Ch, Week 197813 Derwent Publications Ltd., London, GB; Class E21, AN 1978-23834A XP002265677 & JP 50 157420 A (NIPPON KAYAKU KK), 19. Dezember 1975 (1975-12-19)

## Beschreibung

Die vorliegende Erfindung betrifft neue Reaktivfarbstoffe, Verfahren zu ihrer Herstellung und ihre Verwendung zum Färben oder Bedrucken von textilen Fasermaterialien.

Die Praxis des Färbens mit Reaktivfarbstoffen hat in neuerer Zeit zu erhöhten Anforderungen an die Qualität der Färbungen und die Wirtschaftlichkeit des Färbeprozesses geführt. Infolge dessen besteht weiterhin ein Bedarf nach neuen Reaktivfarbstoffen, welche verbesserte Eigenschaften, insbesondere in bezug auf die Applikation, aufweisen.

Für das Färben werden heute Reaktivfarbstoffe gefordert, die eine ausreichende Substantivität haben und die zugleich eine gute Auswaschbarkeit der nicht fixierten Anteile aufweisen. Sie sollen ferner eine gute färberische Ausbeute aufweisen und hohe Reaktivität besitzen, wobei insbesondere Färbungen mit hohen Fixiergraden geliefert werden sollen. Von den bekannten Farbstoffen werden diese Anforderungen nicht in allen Eigenschaften erfüllt.

Im US Patent 5,952,476 werden rote Reaktivfarbstoffe beschrieben, die sich zum Färben einer Vielzahl verschiedenartiger Fasern eignen und sich insbesondere durch gutes Aufbauverhalten und hohe Echtheiten auf Cellulose auszeichnen. Das Aufbauvermögen dieser Farbstoffe auf synthtischen Polyamidfasern genügt jedoch nicht allen Ansprüchen,

Der vorliegenden Erfindung liegt daher die Aufgabe zugrunde, neue, verbesserte Reaktivfarbstoffe für das Färben und Bedrucken von Fasermaterialien zu finden, welche die oben charakterisierten Qualitäten in hohem Masse besitzen. Die neuen Farbstoffe sollten sich vor allem durch hohe Fixierausbeuten und hohe Faser-Farbstoff-Bindungsstabilitäten auszeichnen. Sie sollten ferner Färbungen mit guten Allgemeinechtheiten, beispielsweise Licht- und Nassechtheiten, ergeben.

Es hat sich gezeigt, dass mit den weiter unten definierten neuen Farbstoffen die gestellte Aufgabe weitgehend gelöst wird, Insbesondere wenn man die Farbstoffe zum Färben von synthetischen Polyamidfasermaterialien einsetzt.

Gegenstand der vorliegenden Erfindung sind daher Reaktivfarbstoffe der Formel 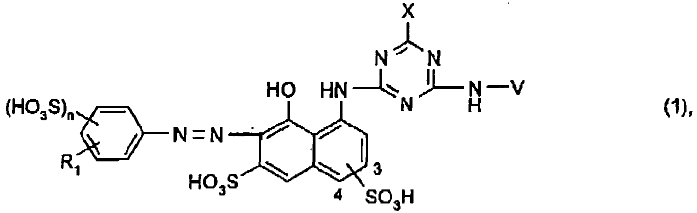 worin
R₁ α,β-Dibrompropionylamino oder α-Bromacryloylamino bedeutet, X Chlor ist,
n die Zahl 0, 1 oder 2 bedeutet, und
V ein Rest der Formel 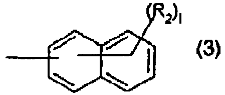 ist, worin
(R₂)₁ für I gleiche oder voneinander verschiedene Substituenten ausgewählt aus der Gruppe Halogen, Hydroxy, Nitro, C₁-C₄-Alkyl und C₁-C₄-Alkoxy steht und
I für die Zahl 0, 1 oder 2 steht

Die erfindungsgemässen Farbstoffe der Formel (1) sind faserreaktiv. Unter faserreaktiven Verbindungen sind solche zu verstehen, die mit den Hydroxylgruppen der Cellulose, den Amlno-, Carboxy-, Hydroxy- oder Thiolgruppen bei Wolle und Seide, oder mit den Amino- und gegebenenfalls mit den Carboxygruppen von synthetischen Polyamiden unter Bildung kovalenter chemischer Bindungen zu reagieren vermögen.

Die In den Farbstoffen der Formel (1) enthaltenen Sulfogruppen liegen jeweils entweder in Form ihrer freien Säure oder vorzugsweise als deren Salze vor. Als Salze kommen beispielsweise die Alkali-, Erdalkali- oder Ammoniumsalze, Salze eines organischen Amins oder Mischungen davon in Betracht. Als Beispiele selen Natrium-, Lithium-, Kalium- oder Ammoniumsalze, das Salz des Mono-, DI- oder Triethanolamins oder Na/Li- oder Na/LI/NH₄-Mischsalze genannt.

Als C₁-C₄-Alkyl kommen für R₂ beispielsweise Methyl, Ethyl, n-Propyl, Isopropyl, n-Butyl, sek.-Butyl, tert.-Butyl oder Iso.-Butyl, vorzugsweise Methyl oder Ethyl und insbesondere Methyl, in Betracht.

Als C₁-C₄-Alkoxy kommen für R₂ beispielsweise Methoxy, Ethoxy, n-Propoxy, Isopropoxy, n-Butoxy, sek.-Butoxy, tert.-Butoxy oder iso.-Butoxy, vorzugsweise Methoxy oder Ethoxy und insbesondere Methoxy, in Betracht.

Als Halogen kommen für R₂ beispielsweise Fluor, Chlor oder Brom, vorzugsweise Chlor oder Brom und Insbesondere Chlor, in Betracht.

Die Sulfogruppe am Naphthalinring des Farbstoffs der Formel (1) befindet sich entweder in der 3- oder der 4-Position, vorzugsweise in der 3-Position.

Bevorzugt steht n für die Zahl 0 oder 1, insbesondere für die Zahl 1.

Bevorzugt steht m für die Zahl 0.

Bevorzugt bedeutet der Rest der Formel (3) im Farbstoff der Formel (1) einen Rest der Formel 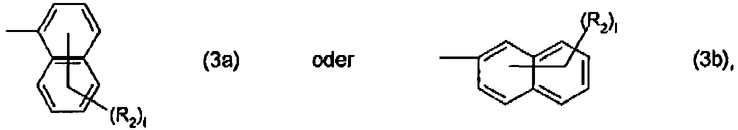 insbesondere der Formel (3a).

Bevorzugt steht (R₂)₁ für I gleiche oder voneinander verschiedene Substituenten ausgewählt aus der Gruppe Halogen, Hydroxy und Nitro.

Bevorzugt steht I für die Zahl 0.

Y als α,β-Dihalogenpropionylamino oder α-Halogenacryloylamino bedeutet vorzugsweise α,β-Dibrompropionylamino, α,β-Dichlorpropionylamino, α-Bromacryloylamino oder α-Chloracryloylamino, insbesondere α,β-Dibrompropionylamino oder α-Bromacryloylamino.

Y als Rest der Formel -CONH-(CH₂)₂₋₃-SO₂-Z ist vorzugsweise ein Rest der Formel -CONH-(CH₂)₂-SO₂-Z, wobei für Z die oben angegebenen Bedeutungen und Bevorzugungen gelten, und insbesondere ein Rest der Formel -CONH-(CH₂)₂-SO₂-(CH₂)₂-Cl oder der Formel -CONH-(CH₂)₂-SO₂-CH=CH₂.

Bevorzugt bedeutet Y α,β-Dibrompropionylamino, α,β-Dichlorpropionylamino, α-Bromacryloylamino oder α-Chloracryloylamino, insbesondere α,β-Dibrompropionylamino oder α-Bromacryloylamino.

R₁ als α,β-Dihalogenpropionylamino oder α-Halogenacryloylamino bedeutet bevorzugt α,β-Dibrompropionylamino, α,β-Dichlorpropionylamino, α-Bromacryloylamino oder α-Chloracryloylamino, insbesondere α,β-Dibrompropionylamino oder α-Bromacryloylamino.

Bevorzugt steht R₁ für Methyl, Ethyl, Methoxy, Ethoxy, α,β-Dibrompropionylamino oder α-Bromacryloylamino.

Besonders bevorzugt steht R₁ für Methoxy, Ethoxy, α,β-Dibrompropionylamino oder α-Bromacryloylamino.

Bevorzugt sind die Reaktivfarbstoffe der Formel 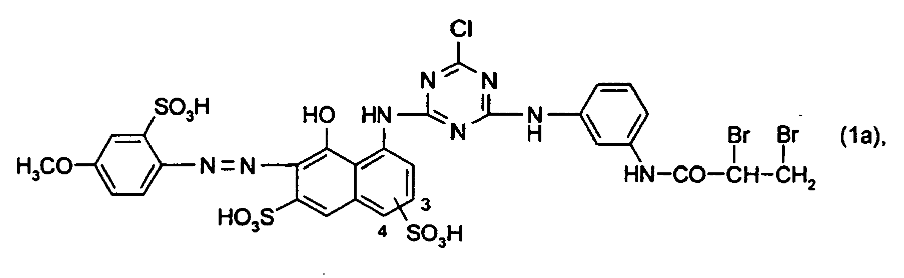 insbesondere der Reaktivfarbstoff der Formel (1a), worin die Sulfogruppe in der 3-Position des Naphthalinrings gebunden ist.

Bevorzugt sind ferner die Reaktivfarbstoffe der Formel 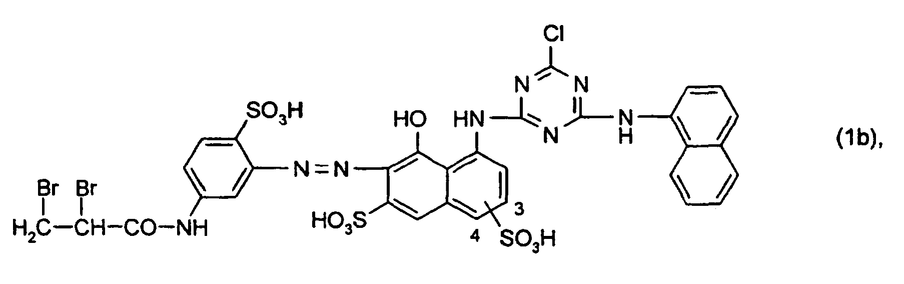 insbesondere der Reaktivfarbstoff der Formel (1b), worin die Sulfogruppe in der 3-Position des Naphthalinrings gebunden ist.

Gegenstand der vorliegenden Erfindung ist ferner ein Verfahren zur Herstellung von Reaktivfarbstoffen der Formel (1), welches dadurch gekennzeichnet ist, dass man eine Verbindung der Formel 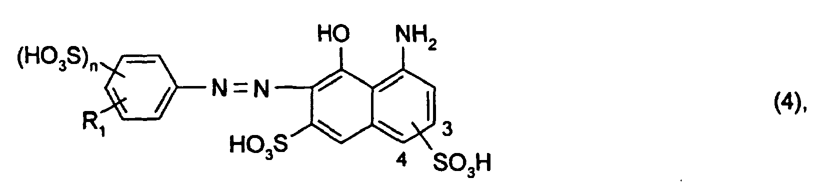 und ein Amin der Formel

H₂N-V (5)

mit Cyanurhalogenid in beliebiger Reihenfolge umsetzt, wobei für R₁, V und n die oben angegebenen Bedeutungen und Bevorzugungen gelten.

Da die einzelnen Verfahrensschritte in unterschiedlicher Reihenfolge, gegebenenfalls auch gleichzeitig, ausgeführt werden können, sind verschiedene Verfahrensvarianten möglich. Im allgemeinen führt man die Umsetzung schrittweise durch, wobei sich die Reihenfolge der einfachen Reaktionen zwischen den einzelnen Reaktionskomponenten vorteilhafterweise nach den besonderen Bedingungen richtet. So wird z.B. in etwa ein Moläquivalent eines Amins der Formel (5) mit in etwa einem Moläquivalent Cyanurhalogenid umgesetzt und das erhaltene Produkt anschliessend mit in etwa einem Moläquivalent einer Verbindung der Formel (4) kondensiert. In einer anderen Verfahrensvariante wird z.B. in etwa ein Moläquivalent einer Verbindung der Formel (4) mit in etwa einem Moläquivalent Cyanurhalogenid umgesetzt und die erhaltene Mischung anschliessend mit in etwa einem Moläquivalent eines Amins der Formel (5) kondensiert.

Als Cyanurhalogenid eignen sich z.B. Cyanurchlorid oder Cyanurfluorid und insbesondere Cyanurchlorid.

Die einzelnen Kondensationsreaktionen erfolgen z.B. gemäss an sich bekannter Verfahren, in der Regel in wässriger Lösung, bei einer Temperatur von z.B. 0 bis 50°C, insbesondere 0 bis 10°C, und einem pH-Wert von z.B. 1 bis 10, insbesondere 1 bis 7.

Anstelle der Verbindung der Formel (4) kann auch das Farbstoffvorprodukt der Verbindung der Formel (4) eingesetzt werden und die erhaltenen Zwischenprodukte durch Diazotierung und Kupplung in die gewünschten Farbstoffe überführt werden.

Das Endprodukt kann gegebenfalls noch einer Umwandlungsreaktion unterzogen werden. Eine solche Umwandlungsreaktion ist beispielsweise die Überführung einer vinylierbaren Reaktivgruppe R₁ oder Y in ihre Vinylform durch Behandeln mit verdünnter Natronlauge, wie z.B. die Überführung der β-Sulfatoethylsulfonyl- oder β-Chlorethylsulfonylgruppe in den Vinylsulfonylrest oder die Überführung der α,β-Dihalogenpropionylaminogruppe in den α-Halogenacryloylaminorest. Solche Reaktionen sind an sich bekannt. Diese Umwandlungsreaktion erfolgt in der Regel in neutralem bis alkalischem Medium bei einer Temperatur von z.B. 20 bis 70°C, bei einem pH-Wert von z.B. 6 bis 14.

Bevorzugt ist ein Verfahren zur Herstellung, worin man ein Amin der Formel 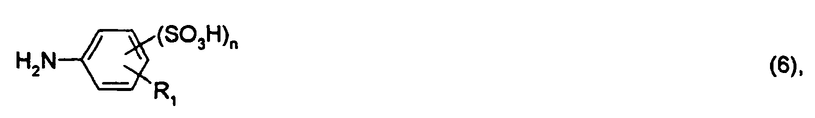 worin für R₁ und n die oben angegebenen Bedeutungen gelten, diazotiert und auf eine Verbindung der Formel 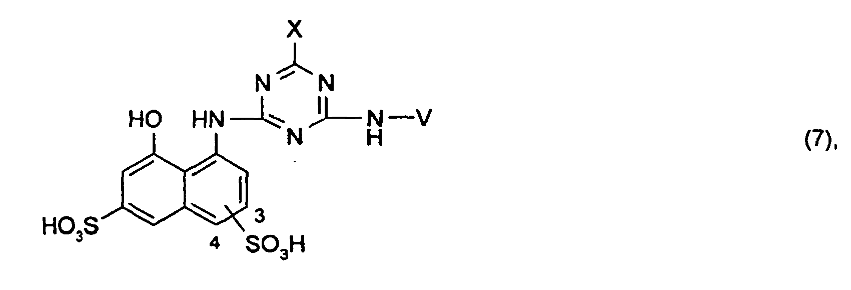 worin für X und V die oben angegebenen Bedeutungen gelten, kuppelt und gegebenenfalls den im erhaltenen Reaktivfarbstoff enthaltenen α,β-Dihalogenpropionylaminorest in den α-Halogenacryloylaminorest umwandelt.

Die Diazotierung und Kupplung erfolgt in an sich bekannter Weise. So erfolgt die Diazotierung des Amins der Formel (6) in der Regel durch Einwirken salpetriger Säure in wässrig-mineralsaurer Lösung bei tiefer Temperatur, wie z.B. 0 bis 20°C, die Kupplung auf die Kupplungskomponente der Formel (7) bei sauren bis neutralen pH-Werten, insbesondere bei einem pH-Wert von 2 bis 6.

In dem erfindungsgemässen Verfahren zur Herstellung der Reaktivfarbstoffe der Formel (1) gelten für die Substituenten der Verbindungen der Formeln (6) und (7) die zuvor angegebenen Bedeutungen und Bevorzugungen.

Die Verbindungen der Formeln (4), (5), (6) und (7) sind bekannt oder können in Analogie zu bekannten Verfahren hergestellt werden.

So können Verbindungen der Formel (7) erhalten werden, indem man eine Verbindung der Formel 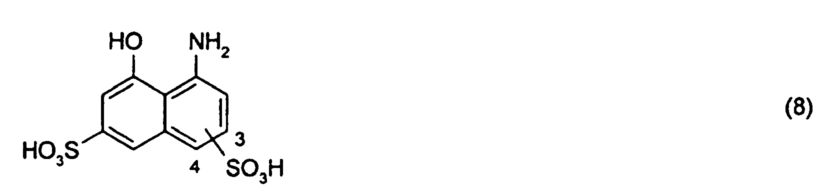 mit Cyanurhalogenid kondensiert und das erhaltene Kondensationsprodukt mit einem Amin der vorgenannten Formel (5) kondensiert.

Die Kondensation erfolgt in an sich bekannter Weise, wie z.B. in wässriger Lösung bei einer Temperatur von beispielsweise 0 bis 40°C und einem pH-Wert von z.B. 1 bis 6. Die Kondensation der Verbindung der Formel (8) mit Cyanurhalogenid, vorzugsweise Cyanurchlorid, erfolgt vorzugsweise bei einer Temperatur von 0 bis 10°C und einem pH-Wert von 1 bis 3. Die Kondensation des erhaltenen Kondensationsprodukt mit dem Amin der Formel (5) erfolgt vorzugsweise bei einer Temperatur von 0 bis 30°C und einem pH-Wert von 4 bis 6.

Die erfindungsgemässen Reaktivfarbstoffe der Formel (1) eignen sich zum Färben oder Bedrucken von stickstoffhaltigen oder hydroxylgruppenhaltigen Fasermaterialien, Papier oder Leder, wie z.B. textilen Fasermaterialien aus Cellulose, Seide und insbesondere Wolle und synthetischen Polyamiden.

Bevorzugt ist das Färben oder Bedrucken von natürlichen oder synthetischen Polyamidfasermaterialien, insbesondere synthetischen Polyamidfasermaterialien, wie z.B. Polyamid 6 oder Polyamid 6,6.

Das genannte Textilmaterial kann in den verschiedensten Verarbeitungsformen vorliegen, wie z.B. als Faser, Garn, Gewebe oder Gewirke.

Die Reaktivfarbstoffe der Formel (1) können zum Färben oder Bedrucken gemäss den üblichen Färbe- bzw. Druckverfahren angewendet werden. Die Färbeflotten oder Druckpasten können ausser Wasser und den Farbstoffen weitere Zusätze, beispielsweise Netzmittel, Antischaummittel, Egalisiermittel oder die Eigenschaft des Textilmaterials beeinflussende Mittel wie z.B. Weichmachungsmittel, Zusätze zum Flammfestausrüsten oder schmutz-, wasser- und öl-abweisende Mittel sowie wasserenthärtende Mittel und natürliche oder synthetische Verdicker, wie z.B. Alginate und Celluloseäther, enthalten.

Die Reaktivfarbstoffe der Formel (1) ergeben egale Färbungen mit guten Allgemeinechtheiten, insbesondere guter Reib-, Nass-, Nassreib- und Lichtechtheit. Ferner zeichnen sie sich durch gleichmässigen Farbaufbau, ein gutes Aufziehvermögen, hohe Reaktivität, gutes Fixiervermögen und ein sehr gutes Aufbauvermögen aus. Die erfindungsgemässen Farbstoffe sind gut wasserlöslich und gut mit anderen Farbstoffen kombinierbar.

Die nachfolgenden Beispiele dienen zur Erläuterung der Erfindung. Die Temperaturen sind in Celsiusgraden angegeben, Teile sind Gewichtsteile, die Prozentangaben beziehen sich auf Gewichtsprozente, sofern nicht anders vermerkt. Gewichtsteile stehen zu Volumenteilen im Verhältnis von Kilogramm zu Liter.

### Beispiel 1:

a) 24 Teile 2-(α,β-Dibrompropionylamino)-anilin-5-sulfonsäure werden bei einer Temperatur von ca. 20°C in 176 Teilen Wasser unter Zugabe von 7 Teilen Natriumchlorid suspendiert und auf einen pH-Wert von 4,4 gestellt. Die so erhaltene Suspension wird durch Zugabe von 13,5 Teilen Salzsäure (32%) und 15 Teilen 4-N Natriumnitritlösung diazotiert. Nach ca. 4 Stunden wird überschüssiges Nitrit mit Sulfaminsäure zerstört.

b) Die gemäss a) erhaltene Suspension der Diazokomponente wird auf eine Temperatur von ca. 10°C und einen pH-Wert von 5 gestellt und zu einer Lösung, welche 31,2 Teile der in Form der freien Säure der Formel 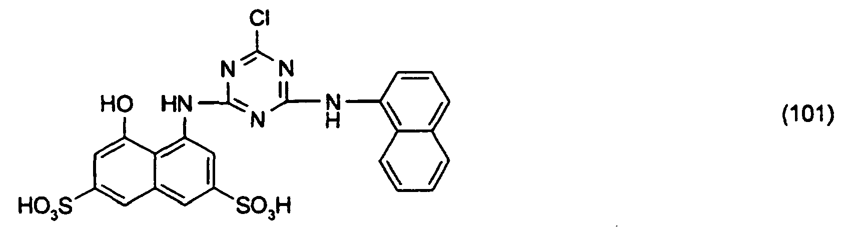 entsprechenden Verbindung in 280 Teilen Wasser enthält und auf einen pH-Wert von 5 gestellt ist, innerhalb von ca. 30 Minuten zugegeben. Hierbei wird der pH durch Zugabe einer wässrigen Natriumhydroxidlösung bei einem Wert von 5 gehalten. Anschliessend wird die Reaktionslösung bei Raumtemperatur gerührt, bis kein Diazoniumsalz mehr nachweisbar ist, und das Produkt durch Zugabe von Natriumchlorid ausgesalzen. Nach Filtration, Nachwaschen mit wässriger Natriumchloridlösung und Trocknung erhält man einen
Farbstoff, der in Form der freien Säure der Verbindung der Formel 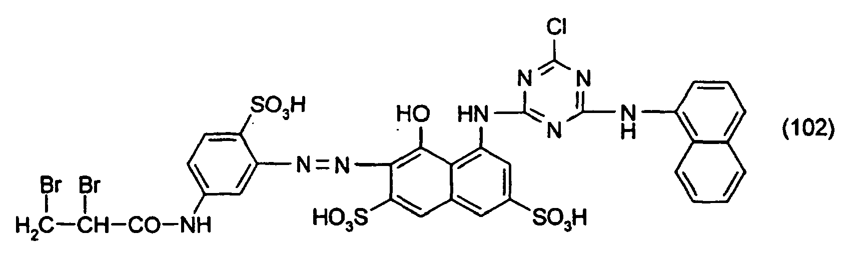 entspricht. Der Farbstoff der Formel (102) färbt Wolle und synthetisches Polyamid in roten Farbtönen.

### Beispiel 2:

Eine gemäss Beispiel 1 a) erhaltene Suspension der Diazokomponente wird auf eine Temperatur von ca. 10°C und einen pH-Wert von 5 gestellt und zu einer Lösung, welche 31,2 Teile der in Form der freien Säure der Formel 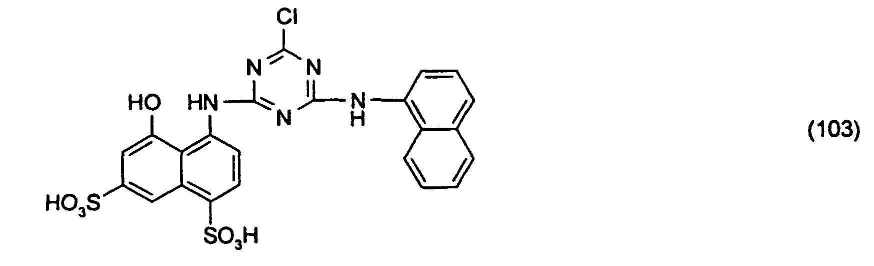 entsprechenden Verbindung in 280 Teilen Wasser enthält und auf einen pH-Wert von 5 gestellt ist, innerhalb von ca. 30 Minuten zugegeben. Hierbei wird der pH durch Zugabe einer wässrigen Natriumhydroxidlösung bei einem Wert von 5 gehalten. Anschliessend wird die Reaktionslösung bei Raumtemperatur gerührt, bis kein Diazoniumsalz mehr nachweisbar ist. Nun wird das Reaktionsgemisch zwecks Acrylierung des erhaltenen Produkts auf eine Temperatur von 30°C erwärmt und durch Zugabe einer wässrigen Natriumhydroxidlösung auf einen pH-Wert von 11 gestellt. Nach ca. 30 Minuten wird der pH auf einen Wert von 6,5 gestellt und das Produkt durch Zugabe von Natriumchlorid ausgesalzen. Nach Filtration, Nachwaschen mit wässriger Natriumchloridlösung und Trocknung erhält man einen Farbstoff, der in Form der freien Säure der Verbindung der Formel 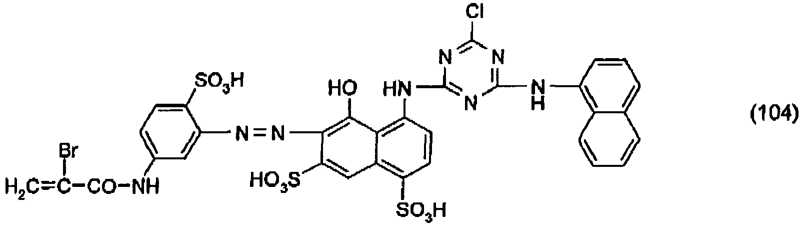 entspricht. Der Farbstoff der Formel (104) färbt Wolle und synthetisches Polyamid in roten Farbtönen.

### Beispiel 3:

In analoger Weise zu den Angaben in Beispiel 1 kann der Farbstoff der Formel 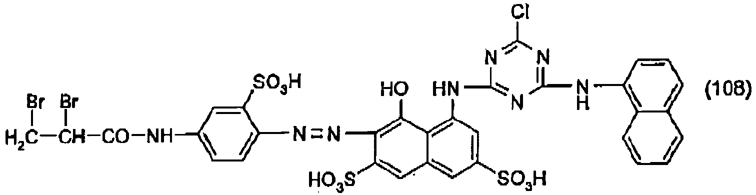 erhalten werden, welcher Wolle und synthetisches Polyamid in roten Farbtönen färbt.

### Färbevorschrift I:

Man färbt 10 Teile Polyamid-6.6-Fasermaterial (Helankatrikot) in 500 Teilen einer wässrigen Flotte, die 2 g/l Ammoniumacetat enthält und mit Essigsäure auf pH 5 gestellt wird. Der Antell des Farbstoffs gemäss Beispiel 1 beträgt 0.8 % bezogen auf das Fasergewicht. Die Färbedauer bei einer Temperatur von 98°C beträgt 30 bis 90 Minuten. Das gefärbte Fasermaterial wird anschliessend herausgenommen und wie üblich gewaschen und getrocknet.

### Färbevorschrift II:

10 Telle Wollstrickgarn werden bei 30°C In ein Färbebad eingerührt, das auf 100 Teile Wasser 0.8 Teile des Farbstoffs gemäss Beispiel 1, 0.5 Teile Natriumsulfat und 2 Teile Natriumacetat enthält und mit Essigsäure (80%) auf einen pH-Wert von 4,5 gestellt ist. Die Flotte wird im Verlauf von 45 Minuten zum Sieden gebracht und während weiteren 45 bis 70 Minuten bei Kochtemperatur gehalten. Daraufhin wird das Färbegut herausgenommen, mit kaltem Wasser gründlich gespült und getrocknet.

## Patentansprüche

1. Reaktivfarbstoffe der Formel 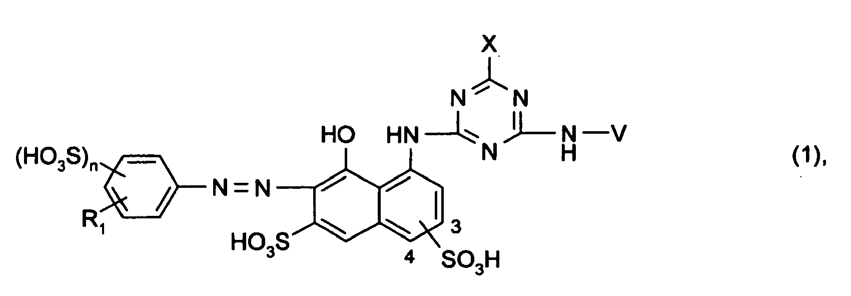 worin
R₁ α,β-Dibrompropionylamino oder α-Bromacryloylamino bedeutet,
X Chlor ist,
n die Zahl 0, 1 oder 2 bedeutet, und
V ein Rest der Formel 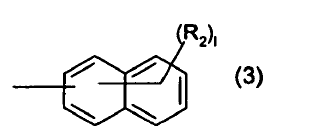 ist, worin
(R₂)₁ für I gleiche oder voneinander verschiedene Substituenten ausgewählt aus der Gruppe Halogen, Hydroxy, Nitro, C₁-C₄-Alkyl und C₁-C₄-Alkoxy steht, und
I für die Zahl 0, 1 oder 2 steht.

2. Reaktivfarbstoffe gemäss Anspruch 1, **dadurch gekennzeichnet, dass** n die Zahl 1 ist.

3. Reaktivfarbstoffe gemäss Anspruch 1, **dadurch gekennzeichnet, dass** sie der Formel 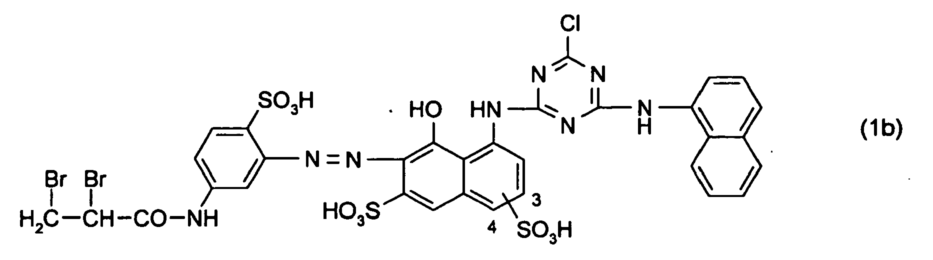 entsprechen.

4. Verfahren zur Herstellung von Reaktivfarbstoffen der Formel (1), welches **dadurch gekennzeichnet ist, dass** man eine Verbindung der Formel 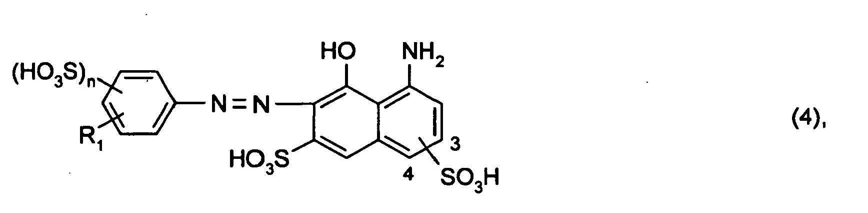 und ein Amin der Formel
H₂N-V (5)
mit Cyanurhalogenid in beliebiger Reihenfolge umsetzt, wobei für R₁, V und n die in Anspruch 1 angegebenen Bedeutungen gelten.

5. Verwendung von Reaktivfarbstoffen gemäss einem der Ansprüche 1 bis 3 bzw. der gemäss Anspruch 4 erhaltenen Reaktivfarbstoffe zum Färben oder Bedrucken von hydroxylgruppenhaltigen oder stickstoffhaltigen Fasermaterialien.

6. Verwendung gemäss Anspruch 5, **dadurch gekennzeichnet, dass** man natürliche oder synthetische Polyamidfasermaterialien, insbesondere synthetische Polyamidfasermaterialien, färbt oder bedruckt.

## Claims

1. Reactive dyes with the formula 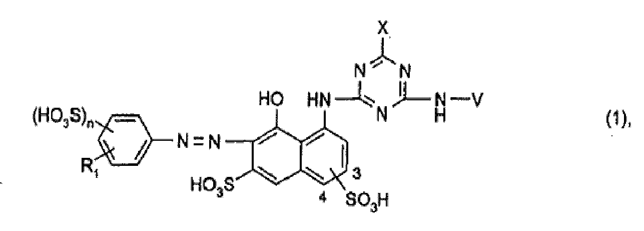 wherein
R₁ indicates α, β-dibromopropionylamino or α-bromacryloylamino,
X is chlorine
n indicates the number 0, 1 or 2, and
V is a residue of the formula 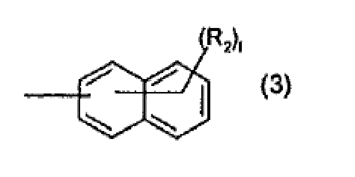 wherein
(R₂)₁ stands for 1 substituents, which are the same or different from one another, selected from the group halogen, hydroxy, nitro, C₁-C₄-alkoxy, and
I stands for the numbers 0, 1 or 2

2. Reactive dyes as claimed in claim 1, **characterised in that** n is the number 1.

3. Reactive dyes as claimed in claim 1, **characterised in that** they correspond to the formula

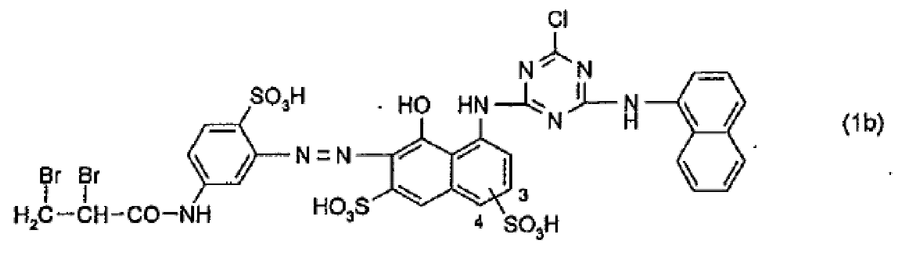

4. A method of manufacturing reactive dyes with the formula (1), which is **characterised in that** a compound with the formula 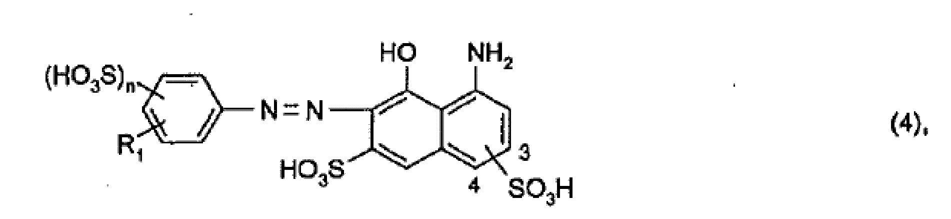 and an amine with the formula
H₂N-V (5)
are reacted with cyanuric halogenide in any desired sequence, whereby the meanings given in claim 1 for R₁, V and n apply.

5. The use of reactive dyes as claimed in one of claims 1 to 3 or the reactive dyes obtained in accordance with claim 4 for dying or printing fibre materials containing hydroxyl groups or containing nitrogen.

6. The use as claimed in claim 5, **characterised in that** natural or synthetic polyamide fibre materials, particularly synthetic polyamide fibre materials, are dyed or printed.

## Revendications

1. Colorants réactifs de la formule : 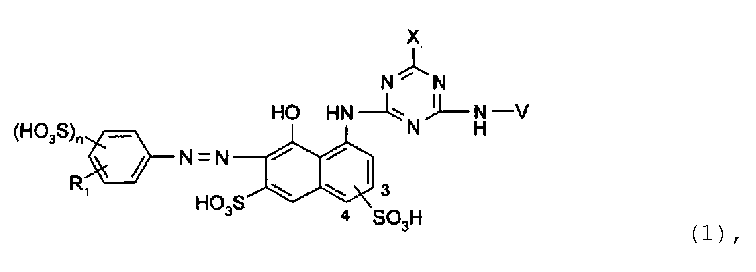 dans laquelle :
- R₁ représente α,β-dibromopropionylamino ou α-bromoacryloylamino ;
- X représente chlore ;
- n signifie le nombre 0, 1 ou 2 ; et
- V représente un reste de la formule : 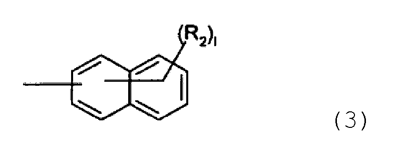
dans laquelle :
- (R₂)₁ représente 1 substituants identiques ou différents les uns des autres choisis dans le groupe consistant en halogène, hydroxy, nitro, alkyle en C₁-C₄ et alcoxy en C₁-C₄ ; et
- 1 représente le nombre 0, 1 ou 2.

2. Colorants réactifs selon la revendication 1, **caractérisés par le fait que** n est le nombre 1.

3. Colorants réactifs selon la revendication 1, **caractérisés par le fait qu'**ils correspondent à la formule :

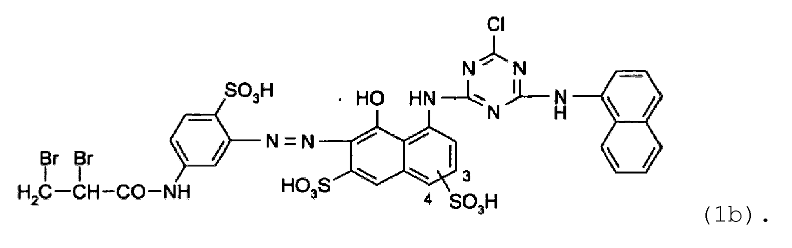

4. Procédé de fabrication de colorants réactifs de la Formule (1), **caractérisé par le fait que** l'on fait réagir un composé de la formule : 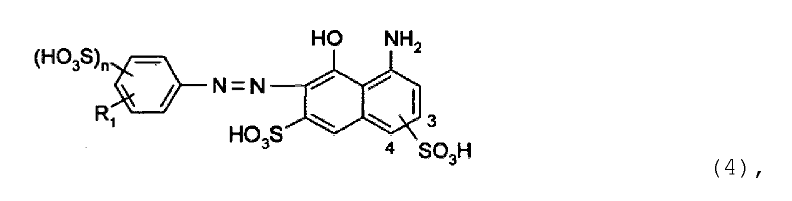 et une amine de la formule :
H₂N-V (5)
avec un halogénure cyanurique dans un ordre quelconque, les significations indiquées dans la revendication 1 valant pour R₁, V et n.

5. Utilisation de colorants réactifs selon l'une des revendications 1 à 3, ou des colorants réactifs obtenus selon la revendication 4, pour la teinture ou l'impression de matériaux fibreux contenant des groupes hydroxyle ou contenant de l'azote.

6. Utilisation selon la revendication 5, **caractérisée par le fait que** l'on teint ou imprime des matériaux fibreux de polyamide, naturels ou synthétiques, en particulier des matériaux fibreux synthétiques de polyamide.
